# EUROPÄISCHE PATENTSCHRIFT

(11) **EP 3 555 357 B1**
(45) Veröffentlichungstag und Bekanntmachung des Hinweises auf die Patenterteilung: **25.08.2021**
(21) Anmeldenummer: 17808458.8
(22) Anmeldetag: 01.12.2017
(51) Int. Cl.: D06F 33/32, A47L 15/46, D06F 101/00

(54) **STEUERUNG EINES HAUSHALTSGERÄTS**
CONTROL OF A HOUSEHOLD APPLIANCE
COMMANDE D'UN APPAREIL MÉNAGER

(30) Priorität: 16.12.2016 DE 102016225274
(43) Veröffentlichungstag der Anmeldung: 23.10.2019
(73) Patentinhaber: BSH Hausgeräte GmbH, 81739 München (DE)
(72) Erfinder: HITZLER, Daniel, 89407 Dillingen OT Fristingen (DE); KLEIN, Jürgen, 86485 Biberbach (DE)
(86) Internationale Anmeldenummer: PCT/EP2017/081226
(87) Internationale Veröffentlichungsnummer: WO 2018/108580

(56) Entgegenhaltungen:
- WO-A1-2013/021330
- CN-A- 104 328 623
- DE-A1-102010 030 016
- JP-A- 2002 273 089

## Beschreibung

Die Erfindung betrifft die Steuerung eines Hausgeräts. Insbesondere betrifft die Erfindung die Erstellung eines Ablaufprogramms für ein Hausgerät.

### Stand der Technik

Ein Hausgerät wie eine Waschmaschine oder ein Geschirrspüler ist dazu eingerichtet, eine Unterstützungsaufgabe in einem Haushalt auf der Basis eines vorbestimmten Ablaufprogramms durchzuführen. Das Ablaufprogramm umfasst üblicherweise mehrere Abschnitte, die nacheinander abgearbeitet werden. Beispielsweise kann ein Reinigungsprogramm für eine Waschmaschine die Abschnitte Vorwaschen, Einweichen, Hauptwaschen und Schleudern umfassen. In jedem Abschnitt können einer oder mehrere Aktoren des Hausgeräts gesteuert werden, im Beispiel der Waschmaschine etwa ein Wasserventil, ein Trommelantrieb oder eine Laugenheizung. Das Fortschalten des Ablaufprogramms durch einzelne Abschnitte oder Schritte ist allgemein von Bedingungen abhängig, die ein Ereignis oder eine vorbestimmte Zeit umfassen können. Ein Ablaufprogramm umfasst alle Bedingungen und daran geknüpfte Aktorsteuerungen in einer vorbestimmten Abfolge.

Üblicherweise ist eine vorbestimmte Anzahl Ablaufprogramme im Hausgerät vorgegeben und ein Beitrag des Benutzers, falls er über die Auswahl des Ablaufprogramms hinausgeht, beschränkt sich auf eine Parametrierung. Beispielsweise kann ein Ablaufprogramm der Waschmaschine für das Waschen von Buntwäsche vorgesehen sein und das Ablaufprogramm kann bei Laugentemperaturen von 30°, 60° oder 90° eingesetzt werden. Das Schleudern des Ablaufprogramms kann durch den Benutzer auf eine maximale Drehzahl oder eine maximale Zeit parametriert werden.

Aus der JP 2002 273 089 A und der CN 104 328 623 A ist jeweils eine Waschmaschine vorbekannt, auf die mittels eines Mobiltelefons ein Waschprogramm geladen werden kann. Die WO 2013/021330 A1 beschreibt ein weiteres programmierbares Hausgerät.

DE 69 318 782 T2 schlägt vor, verschiedene Varianten von Hausgeräten herzustellen, indem jeder Variante ein Definitionsmuster zugeordnet wird, das einen Zusammenhang zwischen Funktionen und Elementen des Hausgeräts herstellt.

DE 10 2010 030 016 B4 schlägt eine Technik vor, um einem Anwender das Erstellen eines neuen Betriebsprogramms für ein Hausgerät zu erleichtern.

Im Allgemeinen ist jedoch nicht vorgesehen, dass ein Benutzer ein eigenes Ablaufprogramm erstellt, das dann auf dem Hausgerät abläuft. Eine Aufgabe, die der vorliegenden Erfindung zugrunde liegt, besteht daher in der Bereitstellung einer verbesserten Technik zur Ablaufprogrammierung eines Hausgeräts. Diese Aufgabe wird durch die Gegenstände der unabhängigen Ansprüche gelöst.

### Offenbarung der Erfindung

Ein Verfahren zur Ablaufprogrammierung eines Hausgeräts umfasst Schritte des Empfangens eines benutzergesteuerten Ablaufprogramms durch das Hausgerät; des Überprüfens des Ablaufprogramms auf eine vorbestimmte Gerätebedingung durch das Hausgerät; und des Freigebens des Ablaufs des Ablaufprogramms im Hausgerät in Abhängigkeit des Ergebnisses der Überprüfung.

Auf diese Weise kann die Ausführung eines beliebigen Ablaufprogramms auf einem Hausgerät ermöglicht werden, ohne die Sicherheit des Hausgeräts zu kompromittieren. Das Ablaufprogramm kann insbesondere benutzergesteuert sein, das heißt, ein Benutzer des Hausgeräts kann in die Lage versetzt werden, das Ablaufprogramm zu erstellen oder ein vorhandenes Ablaufprogramm zu verändern. Die Überprüfung auf die vorbestimmte Gerätebedingung kann den Rahmen darstellen, innerhalb dessen ein Ablaufprogramm frei operieren kann. Eine Verletzung der Rahmenbedingungen kann verhindert werden, indem ein Ablaufprogramm, das eine vorbestimmte Gerätebedingung verletzt, nicht zur Ausführung auf dem Hausgerät zugelassen wird. Das Hausgerät kann dann noch mit einem anderen Ablaufprogramm benutzt werden, das beispielsweise fest im Hausgerät installiert ist.

Die Entwicklung des Ablaufprogramms kann so auf einem anderen Gerät als dem Hausgerät stattfinden. Bedienelemente, die für das Entwickeln bevorzugt vorhanden sind, etwa eine erweiterte graphische oder numerische Anzeige von Parametern oder eine erweiterte Tastatur zur Befehlseingabe, müssen so nicht am Hausgerät nachgerüstet werden. Das Hausgerät kann daher kostengünstig hergestellt werden, während das Entwickeln des Betriebsprogramms auf einem anderen Gerät effizienter durchgeführt werden kann.

Als Hausgeräte werden hier allgemein Geräte angesehen, die eine programmierbare Ablaufsteuerung umfassen und zum Einsatz in einem Privathaushalt vorgesehen sind. Hausgeräte werden im Allgemeinen in geschlossenen Räumen eingesetzt und dienen häufig der Reinigung oder Instandsetzung von Gegenständen des täglichen Gebrauchs, etwa zum Kochen, Kühlen, Spülen oder Waschen. Insbesondere kann ein Hausgerät einen Geschirrspüler, eine Waschmaschine oder eine Bügelmaschine umfassen.

Das Hausgerät kann beispielsweise durch einen Benutzer oder einen Dienstleister mittels des Ablaufprogramms individuell angepasst werden. Besitzt ein Benutzer eines Geschirrspülers beispielsweise besonderes Geschirr, das er reinigen möchte (Goldrand-Porzellan, Uranglas, Silberbesteck etc.), so kann er ein angepasstes Ablaufprogramm dafür entwickeln oder entwickeln lassen. Auch eine Verwendung des Hausgeräts für einen speziellen Zweck kann so ermöglicht werden, etwa zur Reinigung von chemischem Laborgerät oder zur Entfernung von Bohr-, Fräs- oder Sägespänen von einem Werkstück aus Metall.

Auf die vorgeschlagene Weise kann verhindert werden, dass das Hausgerät in einer Weise verwendet wird, die die Betriebssicherheit des Hausgeräts, die Sicherheit einer Person oder eines Objekt im Bereich des Hausgeräts oder die Unversehrtheit eines zu behandelnden Gegenstands gefährdet. Eine zu erwartende Lebensdauer des Hausgeräts kann unverkürzt bleiben. Eine Produkthaftung eines Herstellers des Hausgeräts kann auch bei Ausführen des empfangenen Ablaufprogramms übernommen werden.

In einer Ausführungsform kann die Erstellung des Ablaufprogramms von dritter Seite durchgeführt werden. Beispielsweise kann das Hausgerät vor der Auslieferung an einen Benutzer durch einen Ausstatter an einen bestimmten Zweck, eine Produktlinie, vorbestimmte Vorgaben (etwa bezüglich einer maximalen Energieaufnahme oder von Emissionen) angepasst werden. Der Ausstatter kann das angepasste Hausgerät dann unter eigener Bezeichnung vermarkten.

Die Gerätebedingung kann insbesondere einen Betriebsparameter eines Aktors des Hausgeräts betreffen. Insbesondere kann der Betriebsparameter die Häufigkeit eines Ein- oder Ausschaltens des Aktors, eine maximale Einschaltdauer des Aktors, eine Eigenschaft eines mittels des Aktors beeinflussbaren Mediums betreffen. Die Eigenschaft kann insbesondere eine Menge, eine Temperatur oder einen Verschmutzungsgrad umfassen. Das Ablaufprogramm kann auch auf eine vorbestimmte maximale Ablaufzeit überprüft werden. Kombinationen sind ebenfalls möglich, wobei das Einhalten vorbestimmter Bedingungen binär (mittels Boolescher Algebra) oder analog durch In-Beziehung-Setzen von Parametern erfolgen kann. In letztgenanntem Fall kann beispielsweise eine formelhafte Bedingung aufgestellt werden, etwa A + B < C, wobei A und B Betriebsparameter sind und C ein Schwellenwert ist. Ist die Bedingung nicht erfüllt, so kann dem Ablaufprogramm die Kontrolle über den Aktor oder über das Hausgerät entzogen werden. Das Einhalten einer vorbestimmten Ablaufzeit kann kombiniert mit oder getrennt von den anderen Gerätebedingungen erfolgen. Insbesondere kann so verhindert werden, dass ein Vorgang bis zum Eintreten einer unerreichbaren Bedingung fortgeführt oder wiederholt wird (Endlosschleife).

Der Aktor kann beispielsweise einen Motor oder eine Heizung umfassen. Der Betriebsparameter kann sicherstellen, dass eine vorbestimmte Last des Aktors vorliegt, um eine Überlastung des Aktors zu vermeiden. Der Motor kann beispielsweise eine Waschtrommel antreiben und die Last kann in Wäsche in der Trommel bestehen. Der Motor kann auch eine Pumpe antreiben und die Last besteht in einer umzuwälzenden Flüssigkeit. Umfasst der Aktor eine Heizung, so kann die Last einen zu heizenden Gegenstand umfassen, etwa eine Lauge oder ein Wäschestück. Der Betriebsparameter kann sicher stellen, dass der Aktor innerhalb seiner Spezifikationen betrieben werden kann. So kann beispielsweise sichergestellt werden, dass ein als Kurzzeitläufer ausgebildeter Aktor nicht zu häufig, nicht zu lange oder nicht zu stark intermittierend betrieben wird. Eine maximale Betriebstemperatur, eine maximale Stromaufnahme oder ein anderer Betriebsparameter kann eingehalten werden.

Die Gerätebedingung wird vor der Ausführung des Ablaufprogramms überprüft. Diese Variante wird auch statische Prüfung genannt und ein Ablaufprogramm, das diese Prüfung nicht besteht, weil es während seiner Ausführung eine Gerätebedingung verletzen könnte, wird gar nicht erst zur Ausführung auf dem Hausgerät zugelassen.

In einer Variante wird die Gerätebedingung auch während der Ausführung des Ablaufprogramms überprüft. Diese Variante kann auch dynamische Prüfung genannt werden. Einem Ablaufprogramm kann die Kontrolle über das Hausgerät entzogen werden, wenn sich während des Betriebs des Hausgeräts die Verletzung einer Gerätebedingung anbahnt oder zeigt. Die dynamische Prüfung kann die statische Prüfung ergänzen. Durch die dynamische Prüfung kann ein potentiell gefährlicher Zustand des Hausgeräts für eines seiner Elemente, eine Person oder einen Gegenstand im Bereich des Hausgeräts oder eines mittels des Hausgeräts bearbeiteten Objekts verbessert vermieden werden. Im Fall eines Abbruchs des Hausgeräts durch die dynamische Prüfung kann ein vorbestimmtes Abbruchprogramm durchgeführt werden, um das Hausgerät in einen stabilen Zustand zu versetzen. Gegebenenfalls kann auch ein schonendes Ende der Behandlung des Objekts gesteuert werden. Beispielsweise kann zur Herstellung des sicheren Zustands eine Lauge eines Geschirrspülers abgepumpt werden. Zu reinigende Objekte können mittels Frischwasser abgewaschen werden.

Im Rahmen der Erfindung kann es auch vorgesehen sein, einen Parameter des Ablaufprogramms, der die Gerätebedingung verletzt, derart zu ändern, dass die Gerätebedingung erfüllt ist. Wird beispielsweise an einer Wasch- oder Geschirrspülmaschine eine Laugentemperatur von > 100° gefordert, so kann die vorgegebene Temperatur auf beispielsweise 90° oder 80° gesenkt werden. Diese Anpassung kann in der statischen oder in der dynamischen Prüfung erfolgen. Bevorzugt wird ein Benutzer des Hausgeräts über die Anpassung informiert, um ein unerwünschtes Verhalten des Hausgeräts zu vermeiden.

In einer Ausführungsform umfasst das Hausgerät eine Kommunikationsschnittstelle, die insbesondere mit einem Netzwerk verbunden werden kann. Von einem Computer einem Server oder einer Speichereinrichtung, die mit dem Netzwerk verbunden ist, kann das Ablaufprogramm dann über die Schnittstelle ins Hausgerät geladen werden.

In einer anderen Ausführungsform wird das Ablaufprogramm optisch übertragen. Dazu liegt das Ablaufprogramm in einer optisch codierten Form vor und seitens des Hausgeräts ist ein optischer Sensor vorgesehen. Der Sensor kann mit geringem Kostenaufwand an dem Hausgerät angebracht werden und robust gegenüber Verschmutzung oder Störungen sein, außerdem pflegeleicht in der Benutzung oder Reinigung. Ein Umfang von an das Hausgerät zu übermittelnden Informationen kann relativ gering sein, beispielsweise im Bereich von ca. 10 Byte bis ca. 10 KByte, sodass die optische Übertragung ausreichend Bandbreite für eine akzeptabel schnelle Übermittlung bietet. Größere Informationsmengen können auf mehrere Codierungen aufgeteilt werden. Das Ablaufprogramm kann insbesondere binär codiert sein, und zwar entweder eindimensional, beispielsweise nach Art eines Strichcode, oder zweidimensional, beispielsweise nach Art eines QR-Codes. Die optische Codierung kann eine Fehlerabsicherung oder Fehlerkorrektur umfassen, um einem Übertragungsfehler des Ablaufprogramms vorzubeugen. In einer weiteren Ausführungsform der Erfindung kann das optisch codierte Ablaufprogramm auch beispielsweise mittels eines mobilen Geräts, etwa eines Smartphone, aufgenommen und anschließend an das Hausgerät übermittelt werden. Diese Übermittlung erfolgt bevorzugt drahtlos, beispielsweise via Bluetooth oder WLAN.

Zum Senden des Ablaufprogramms kann insbesondere ein mobiles Gerät mit einer optischen Ausgabeeinrichtung verwendet werden. Ein solches Gerät kann etwa ein Laptop oder ein Smartphone umfassen. Das Gerät kann mit einem anderen Gerät datentechnisch vernetzt sein und das Ablaufprogramm aus einer externen Quelle laden. Das Gerät kann auch zur Erstellung oder Entwicklung des Ablaufprogramms verwendet werden. So kann beispielsweise ein Programm ("App") auf dem Smartphone zur einfachen und intuitiven Anpassung von Ablaufparametern eines vorbestimmten Ablaufprogramms angeboten werden. Das Maß der Beeinflussbarkeit des Ablaufprogramms kann in unterschiedlichen Stufen vorbestimmt sein. Beispielsweise können durch Konstrukte wie eine bedingte Schleifenausführung (WHILE), einen bedingten Sprung (IF-GOTO) oder parametrierte Unterprogramme (CALL) mächtige Programmierkonzepte bereitgestellt werden.

Eine Steuervorrichtung für ein Hausgerät umfasst eine Schnittstelle zum Empfangen eines Ablaufprogramms; eine Verarbeitungseinrichtung, die dazu eingerichtet ist, das Ablaufprogramm auf eine vorbestimmte Gerätebedingung zu überprüfen; und den Ablauf des Ablaufprogramms durch das Hausgerät in Abhängigkeit des Ergebnisses der Überprüfung freizugeben, sodass der Ablauf des Ablaufprogramms freigegeben wird, wenn die vorbestimmte Gerätebedingung erfüllt ist, und, wenn die vorbestimmte Gerätebedingung verletzt ist, der Ablauf des Ablaufprogramms durch das Hausgerät nicht zugelassen oder einen Parameter des Ablaufprogramms, der die Gerätebedingung verletzt, derart geändert wird, dass die Gerätebedingung erfüllt ist. Für die Prüfung kann nur ein bescheidener Verarbeitungsaufwand erforderlich sein, sodass eine übliche Verarbeitungseinrichtung zur Steuerung des Hausgeräts dafür verwendet werden kann. Außerdem kann es akzeptabel sein, dass die Prüfung mehrere Sekunden in Anspruch nimmt.

Die Steuervorrichtung kann zur Ausführung wenigstens eines Teils des oben beschriebenen Verfahrens eingerichtet sein. Dazu ist bevorzugt, dass die Steuervorrichtung eine Verarbeitungseinrichtung umfasst, die insbesondere durch einen programmierbaren Mikrocomputer oder Mikrocontroller gebildet sein kann. Merkmale oder Vorteile, die bezüglich der Steuervorrichtung genannt sind, können auch auf das Verfahren bezogen werden und umgekehrt.

### Kurze Beschreibung der Figuren

Die Erfindung wird nun unter Bezug auf die beiliegenden Figuren genauer beschrieben, in denen:
- Fig. 1: ein System mit einem ablaufprogrammierbaren Hausgerät;
- Fig. 2: eine Veranschaulichung eines Verfahrens; und
- Fig. 3: ein Ablaufprogramm für ein Hausgerät
darstellt.

### Genaue Beschreibung von Ausführungsbeispielen

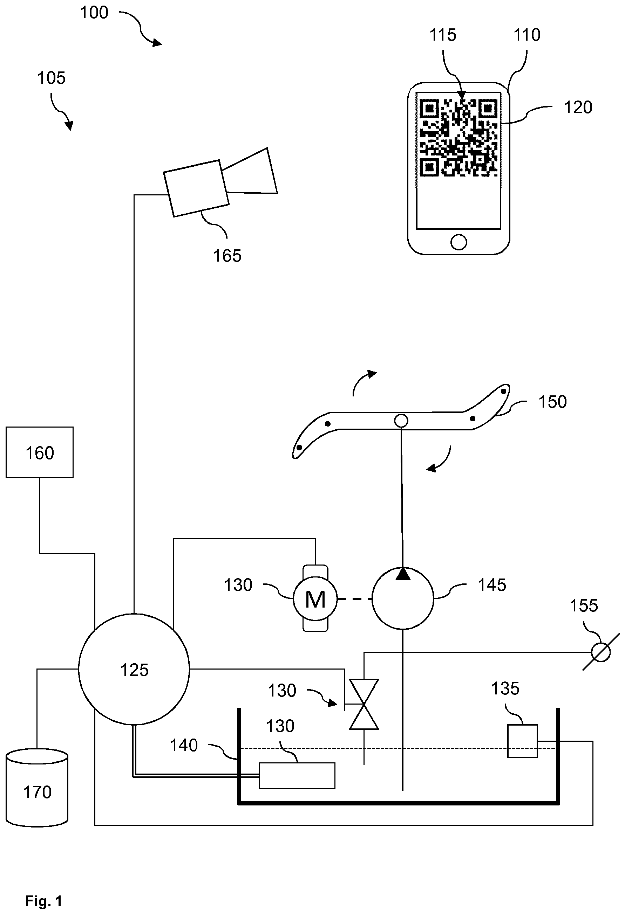

Figur 1 zeigt ein System 100, das ein ablaufprogrammierbares Hausgerät 105 und ein Gerät 110 umfasst. Das Hausgerät 105 umfasst hier rein exemplarisch einen Geschirrspüler, es könnte aber auch ein beliebiges anderes Hausgerät 105 verwendet werden. Das Hausgerät 105 kann mittels eines Ablaufprogramms 115 gesteuert werden. Das Gerät 110 umfasst bevorzugt ein mobiles Gerät, das zumindest eine optische Ausgabeeinrichtung 120 umfasst. Die Ausgabeeinrichtung 120 ist weiter bevorzugt dazu eingerichtet, das Ablaufprogramm 115 optisch codiert anzuzeigen. Dazu ist die Ausgabeeinrichtung 120 bevorzugt zweidimensional ausgeführt. Die Ausgabeeinrichtung 120 kann ein vorbestimmtes Kontrastverhältnis (z. B. > 20:1) aufweisen und weiter optional hintergrundbeleuchtet ausgeführt sein.

Das Hausgerät 105 ist schematisch und in einer stark vereinfachten Form dargestellt. Er umfasst eine Steuervorrichtung 125, die zur Ausführung des Ablaufprogramms 115 eingerichtet ist, wenigstens einen Aktor 130 und üblicherweise wenigstens einen Sensor 135. Rein beispielhaft umfasst das Hausgerät 105 in der dargestellten Ausführungsform als Geschirrspüler einen Wasserbehälter 140, aus dem Wasser mittels einer Wasserpumpe 145 in einen drehbaren Sprüharm 150 gepumpt werden kann, der das Wasser auf Geschirr sprühen kann. Das Wasser kann anschließend in den Wasserbehälter 140 abtropfen. In der dargestellten Ausführungsform sind ein erster Aktor 130 als Pumpenmotor zum Antrieb der Wasserpumpe 145, ein zweiter Aktor 130 als steuerbares Wasserventil zwischen einem Wasserzulauf 155 und dem Wasserbehälter 140, sowie ein dritter Aktor 130 als Heizung für Wasser im Wasserbehälter 140 vorgesehen. Der Sensor 135 kann beispielsweise einen Füllstands- oder Temperatursensor umfassen. Auch ein Zeitgeber kann als Sensor 135 gezählt werden. Optional umfasst das Hausgerät 105 ein Bedienelement 160, das Ein- und/oder Ausgabeelemente für eine Bedienperson umfassen kann.

Die Aktoren 130 werden mittels des Ablaufprogramms 115 in einer vorbestimmten Reihenfolge aktiviert und deaktiviert. Jedes Aktivieren oder Deaktivieren kann auf einen Parameter gestützt sein, der beispielsweise mittels eines Sensors 135 abgetastet werden kann. Vorgaben für Parameter können ferner vom Bedienelement 160 abgetastet werden. Beispielsweise kann das Wasserventil 130 geöffnet werden, bis ein durch den Sensor 135 abgetasteter Wasserstand einen vorbestimmten Schwellenwert erreicht. Anschließend kann die Heizung 130 eingeschaltet werden, bis die Temperatur des Wassers im Wasserbehälter 140 laut dem Sensor 135 eine vorbestimmte Temperatur erreicht hat. Diese vorgegebene Temperatur kann vom Bedienelement 160 abgetastet werden. Eine durch die Heizung 130 fließende Stromstärke kann in Abhängigkeit der Temperatur des Wassers im Wasserbehälter 140 angepasst werden, um ein rasches Aufheizen zu ermöglichen, gleichzeitig aber eine Überlastung der Heizung 130 möglichst zu vermeiden. Der eigentliche Reinigungsvorgang des Geschirrs kann durch Aktivieren des Pumpenmotors 130 begonnen werden.

Es wird vorgeschlagen, die Übertragung eines Ablaufprogramms 115 aus einer externen Quelle ins Hausgerät 105 zu ermöglichen und die Ausführung des Ablaufprogramms 115 durch die Steuervorrichtung 125 zu erlauben, falls das empfangene Ablaufprogramm 115 vorbestimmte Gerätebedingungen erfüllt. Die Gerätebedingungen können durch die Bauart des Hausgeräts 105 oder durch eine vorbestimmte Restriktion vorgegeben sein und sind bevorzugt so gewählt, dass eine Überlastung, eine Fehlfunktion oder ein übermäßiger Verschleiß am Hausgerät 105 oder eines seiner Elemente vermieden werden.

Die Übertragung kann auf unterschiedliche Weisen erfolgen; in der dargestellten, bevorzugten Ausführungsform ist eine optische Schnittstelle 165 vorgesehen, um das optisch codierte Ablaufprogramm 115 vom Gerät 110 oder einer anderen Quelle abtasten zu können. Die optische Schnittstelle 165 kann eine Kamera mit einem Zeilensensor oder einem Flächensensor umfassen, um das zwei- oder dreidimensional codierte Ablaufprogramm 115 abtasten zu können. In einer anderen Variante kann ein lasergesteuerter optischer Codesensor vorgesehen sein. In einer besonders bevorzugten Ausführungsform liegt das Ablaufprogramm 115 codiert als QR-Code vor, wobei je nach zu übertragendem Datenvolumen, Qualität der optischen Schnittstelle 165 und angestrebter Robustheit der Übertragung unterschiedliche, bekannte Codierungen verwendet werden können. Die Codierung kann Kontrollbits zur Fehlererkennung und in einer weiteren Ausführungsform auch Korrekturbits zur Korrektur von Übertragungsfehlern umfassen. Nach dem Empfangen kann das Ablaufprogramm 115 in einem Speicher 115 abgelegt werden. Ein Benutzer des Hausgeräts 105 kann das empfangene oder ein anderes Ablaufprogramm 105 mittels des Bedienelements 160 auswählen und gegebenenfalls parametrieren, um das Hausgerät 105 zu benutzen.

Das Ablaufprogramm 115 wird bevorzugt nach seinem Empfang vom Hausgerät 105 der Prüfung auf Einhalten der Gerätebedingungen unterzogen, sodass die Überprüfung innerhalb des Hausgeräts 105 durchgeführt wird und eine Manipulation des Prüfverfahrens weitgehend ausgeschlossen ist. Die Prüfung kann das Einhalten vorbestimmter Gerätebedingungen umfassen. Eine Gerätebedingung kann vorsehen, dass ein Parameter, der am Hausgerät 105 während des Ablaufs des Ablaufprogramms 115 bestimmt werden kann, ober- oder unterhalb eines vorbestimmten Schwellenwerts oder innerhalb eines vorbestimmten Bereichs liegt.

Ein solcher Parameter kann unmittelbar zur Ablaufsteuerung des Hausgeräts 105 verwendet werden, beispielsweise eine Wassertemperatur im Wasserbehälter 140. Es kann auch ein weniger offensichtliche Parameter getestet werden, etwa das Einhalten einer maximalen Stromaufnahme des gesamten Hausgeräts 105. Wieder ein anderer Parameter kann einen erwarteten Verschleiß einer Komponente des Hausgeräts 105 betreffen und beispielsweise auf der Basis einer Schaltfrequenz eines Elements oder eines historischen Temperaturverlaufs bestimmt werden. Ein Parameter kann auch algorithmisch auf der Basis mehrerer Sensorwerte oder Aktorbetätigungen bestimmt werden. Beispielsweise kann eine Emission einer aggressiven Substanz aus dem beschriebenen Reinigungsvorgang aufgrund einer Wassermenge, einer Verschmutzung und einer Zugabe von Reinigungsmittel bestimmt werden. Nicht alle Parameter, die als Gerätebedingung geprüft werden, müssen offengelegt sein. Bestimmte Gerätebedingungen können so komplex zu formulieren sein, dass einem Ersteller oder Bearbeiter der Ablaufprogramms 115 nur eine allgemeine Empfehlung angegeben werden kann, beispielsweise eine Emission oder eine Stromaufnahme möglichst nicht zu groß werden zu lassen. Hinweise, wie derartige Empfehlungen einzuhalten sind, können ebenfalls gegeben werden.

Es ist bevorzugt, dass die Steuervorrichtung 125, die zur Steuerung des Hausgeräts 105 eingerichtet ist, auch die Prüfung des Ablaufprogramms 115 vornimmt. In einer anderen Ausführungsform kann auch eine dedizierte Steuervorrichtung 125 für die Prüfung vorgesehen sein.

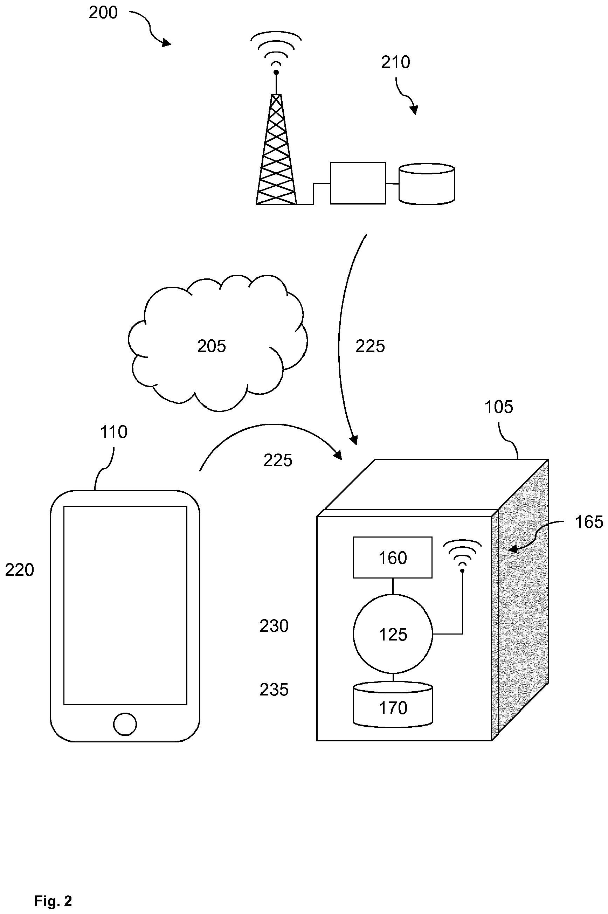

Figur 2 zeigt eine Veranschaulichung eines Verfahrens 200 zum Steuern eines Hausgeräts 105 wie des Geschirrspülers 105 von Figur 1. Dabei wird ein Hausgerät 105 nach einer der oben mit Bezug auf Figur 1 erwähnten Ausführungsformen bevorzugt. Ferner kann ein Gerät 110 nach Figur 1 verwendet werden. Optional können ferner ein Kommunikationsnetz 205 oder eine zentrale Komponente 210 für das Verfahren 200 benutzt werden. Das Kommunikationsnetz 205 kann ganz oder teilweise drahtlos oder auch kabelgebunden aufgebaut sein. Bevorzugt kann Kommunikationsnetz 205 einen Teil des Internet bilden. Die zentrale Komponente 210 kann insbesondere einen Server oder einen ähnlichen zentralen Dienst umfassen. Die Komponente 210 kann durch das Kommunikationsnetz 205 anonymisiert werden, sodass ein physischer Aspekt der Komponente 210 wie ihr Aufstellungsort für die Nutzung eines von ihm angebotenen oder erbrachten Diensts unerheblich sein kann ("cloud server"). In einer Ausführungsform ist die Komponente 210 dazu eingerichtet, eine Kommunikationsverbindung zu einem oder mehreren Hausgeräten 105 eines Haushalts herzustellen. Eine solche Komponente ist unter der Bezeichnung "Home Connect Server" von Bosch Siemens Hausgeräte (BSH) bekannt.

In einem optionalen Schritt 220 wird auf dem Gerät 110 das Ablaufprogramm 115 erstellt oder ein bereits bestehendes Ablaufprogramm 115 wird bearbeitet. In einer Ausführungsform wird dazu ein lokal auf dem Gerät 110 installiertes Programm ("App") verwendet und das editierte Ablaufprogramm 115 kann lokal auf dem Gerät 110 abgespeichert sein. In einer anderen Ausführungsform kann das Manipulationsprogramm auch auf der zentralen Komponente 210 ablaufen und mittels des Geräts 110 gesteuert werden ("Webapp"). Das editierte Ablaufprogramm 115 kann auf der zentralen Komponente gespeichert sein. Das Editieren kann eine Eingabe, eine Übersetzung der Eingabe oder das Anwenden eines oder mehrerer Parameter umfassen.

Jedes dieser Teilergebnisse kann optional validiert werden. Beim Validieren kann lokal, also außerhalb des Hausgeräts 105 überprüft werden, ob das Ablaufprogramm 115 vorbestimmte Grenzen einhält. Insbesondere kann das Einhalten der Gerätegrenzen eines bekannten Hausgeräts 105 überprüft werden. Das Validieren kann im Rahmen des Editierens des Ablaufprogramms oder vor dem Übermitteln an das Hausgerät 105 erfolgen. Dabei kann die Validierung in unterschiedlichen Varianten des Verfahrens 200 beispielsweise durch das Gerät 110 oder durch die Komponente 210 erfolgen. Schlägt die Validierung fehl, so wird bevorzugt eine Übermittlung des Ablaufprogramms 115 verhindert.

In einer Ausführungsform umfasst das Ablaufprogramm 115 editierte Parameter, in einer anderen Ausführungsform wird eine Parameterliste separat vom Ablaufprogramm 115 bereitgestellt. Parameter, die von einem Benutzer des Hausgeräts 105 gesteuert werden, können durch das Ablaufprogramm 115 überprüft oder der Parameterliste hinzugefügt werden.

Das Ablaufprogramm 115 kann dann in einem Schritt 225 an das Hausgerät 105 übermittelt werden. In der Ausführungsform von Figur 1 wird hierfür eine lokale Schnittstelle verwendet, die zu einer optischen Übermittlung eingerichtet ist. In einer anderen Ausführungsform kann die lokale Schnittstelle auch beispielsweise drahtlos nach dem WLAN- oder Bluetooth-Standard ausgeführt sein. Andere lokale Schnittstellen, beispielsweise kabelgebunden, etwa mittels RS232 oder USB, sind ebenfalls möglich. Die Übermittlung kann auch das Kommunikationsnetz 205 verwenden. Dieser Weg ist insbesondere dann bevorzugt, wenn das bereitgestellte Ablaufprogramm 115 auf der zentralen Komponente 210 vorliegt. Die Übertragung kann wahlweise seitens des Hausgeräts 105 oder seitens des sendenden Geräts 110, 210 initiiert werden.

In einem Schritt 230 wird das empfangene Ablaufprogramm 115 durch das Hausgerät 105 auf Einhalten einer vorbestimmten Gerätebedingung überprüft. Dazu können Parameter, die im Ablaufprogramm 115 verwendet werden oder ihm beigefügt sind, darauf überprüft werden, ob sie in vorbestimmten Bereichen liegen. Weitere Parameter, Zwischenergebnisse, Randbedingungen oder übergeordnete Ziele können ebenfalls geprüft werden, wie oben genauer beschrieben ist. Schlägt ein Test fehl, wird also eine Gerätebedingung nicht erfüllt, so kann die Ausführung des Ablaufprogramms 115 verhindert werden. Andernfalls, wenn alle vorbestimmten Gerätebedingungen erfüllt werden, kann die Ausführung des Ablaufprogramms 115 in einem Schritt 235 freigegeben werden.

Alternativ oder zusätzlich zum Sperren kann das Ablaufprogramm 115 bzw. ein Parameter für das Ablaufprogramm 115 automatisch derart angepasst werden, dass alle Gerätebedingungen erfüllt werden können. Eine entsprechende Benachrichtigung eines Benutzers ist hierbei bevorzugt. Das geänderte Ablaufprogramm 115 kann dann im Speicher 170 zur späteren Verwendung abgelegt werden. Erfolgt das Überprüfen der Gerätebedingung während des Durchführens des Ablaufprogramms 115, so kann ein kontrollierter Ausstieg ("graceful exit") aus dem Ablaufprogramm 115 gesteuert werden.

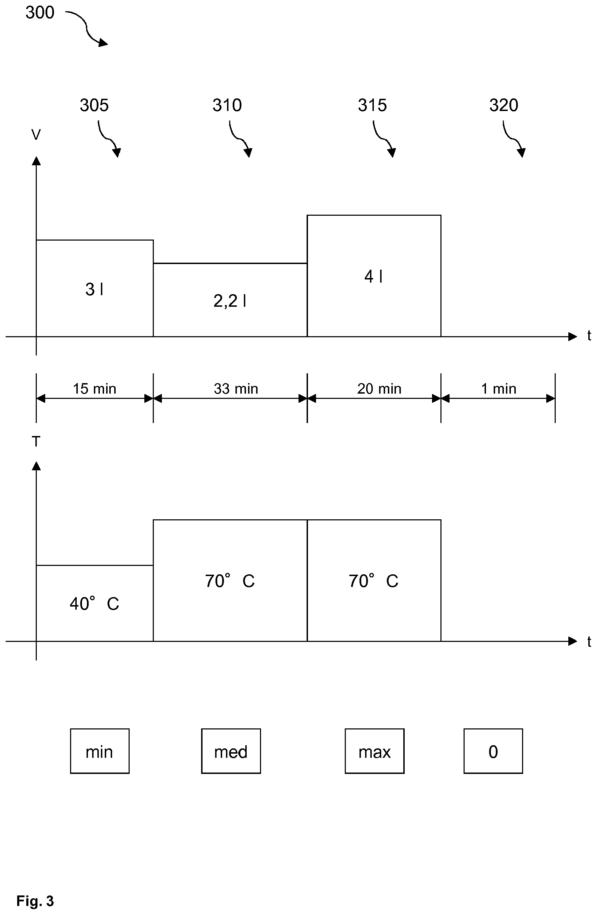

Figur 3 zeigt ein exemplarisches Ablaufprogramm 115 für ein Hausgerät 105, am Beispiel des Geschirrspülers 105 von Figur 1. Gezeigt ist eine graphische Darstellung des zeitlichen Verlaufs verschiedener beispielhafter Parameter des Hausgeräts 105. In einem oberen Bereich ist ein gewünschter Verlauf einer Wassermenge im Wasserbehälter 140, in einem mittleren Bereich ein gewünschter Verlauf einer Temperatur des Wassers im Wasserbehälter 140 dargestellt. In horizontaler Richtung ist jeweils die Zeit angetragen. Das as Ablaufprogramm 115 umfasst hier beispielhaft vier zeitlich aufeinanderfolgende Phasen 305, 310, 315 und 320. In einem unteren Bereich ist ein Energiebedarf für die jeweilige Phase 305 ― 320 dargestellt.

Ein Programm zum Ändern des Ablaufprogramms 115 kann es beispielsweise erlauben, die zeitliche Dauer einer der Phasen 305 ― 320 oder deren Reihenfolge zu verändern. Weitere Einflussmöglichkeiten können das Erhöhen oder Verringern der Wassermenge oder der Temperatur des Wassers im Wasserbehälter 140 in einer der Phasen 305 ― 320 umfassen. Die Anzeige des Energieverbrauchs kann dabei helfen, das Ablaufprogramm 115 interaktiv so zu verändern, dass der Energieverbrauch minimiert wird. Anstelle des Energieverbrauchs können auch einer oder mehrere weitere Parameter dargestellt werden, beispielsweise eine Schallentwicklung, ein Verschleiß des Hausgeräts 105 oder wie schonend oder aggressiv der Ablauf des Ablaufprogramms 115 für ein zu behandelndes Objekt ist.

### Bezugszeichen

- 100: System
- 105: Hausgerät, z. B. Geschirrspüler
- 110: Gerät
- 115: Ablaufprogramm
- 120: optische Ausgabeeinrichtung
- 125: Steuervorrichtung
- 130: Aktor
- 135: Sensor
- 140: Wasserbehälter
- 145: Wasserpumpe
- 150: Sprüharm
- 155: Wasserzulauf
- 160: Bedienelement
- 165: optische Schnittstelle
- 170: Speicher

- 200: Verfahren
- 205: Kommunikationsnetzwerk
- 210: zentrale Komponente
- 220: Ablaufprogramm erstellen
- 225: Kommunikationsprogramm hochladen
- 230: überprüfen
- 235: freigeben

- 305: erste Phase
- 310: zweite Phase
- 315: dritte Phase
- 320: vierte Phase

## Patentansprüche

1. Verfahren (200) zur Ablaufprogrammierung eines Hausgeräts (105) mit programmierbarer Ablaufsteuerung, wobei das Verfahren (200) folgende Schritte umfasst:
- Empfangen (225) eines Ablaufprogramms (115) durch das Hausgerät (105);
- Überprüfen (230) des Ablaufprogramms (115) auf eine vorbestimmte Gerätebedingung durch das Hausgerät (105); und
- Freigeben (235) des Ablaufs des Ablaufprogramms (115) im Hausgerät (105) in Abhängigkeit des Ergebnisses der Überprüfung, wobei der Ablauf des Ablaufprogramms (115) freigegeben wird, wenn die vorbestimmte Gerätebedingung erfüllt ist, und,
- wenn die vorbestimmte Gerätebedingung verletzt ist, der Ablauf des Ablaufprogramms (115) nicht zugelassen wird oder ein Parameter des Ablaufprogramms (115) verändert wird, der die Gerätebedingung verletzt, so dass die Gerätebedingung erfüllt ist.

2. Verfahren (200) nach Anspruch 1, wobei die Gerätebedingung einen Betriebsparameter eines Aktors (130) des Hausgeräts (105) betrifft.

3. Verfahren (200) nach Anspruch 2, wobei der Betriebsparameter die Häufigkeit eines Ein- oder Ausschaltens des Aktors (130) betrifft.

4. Verfahren (200) nach Anspruch 2 oder 3, wobei der Betriebsparameter eine maximale Einschaltdauer des Aktors (130) betrifft.

5. Verfahren (200) nach einem der Ansprüche 2 bis 4, wobei der Betriebsparameter eine Eigenschaft eines mittels des Aktors (130) beeinflussbaren Mediums betrifft.

6. Verfahren (200) nach einem der vorangehenden Ansprüche, wobei ferner das Ablaufprogramm (115) auf eine vorbestimmte maximale Ablaufzeit überprüft wird.

7. Verfahren (200) nach einem der vorangehenden Ansprüche, wobei die Gerätebedingung während der Ausführung des Ablaufprogramms (115) überprüft wird.

8. Verfahren (200) nach einem der vorangehenden Ansprüche, wobei das Ablaufprogramm (115) in einer optisch codierten Form empfangen (225) wird.

9. Steuervorrichtung (125) für ein Hausgerät (105) mit programmierbarer Ablaufsteuerung, wobei die Steuervorrichtung (125) folgendes umfasst:
- eine Schnittstelle (165) zum Empfangen eines Ablaufprogramms (115);
- eine Verarbeitungseinrichtung, die dazu eingerichtet ist, das Ablaufprogramm (115) auf eine vorbestimmte Gerätebedingung zu überprüfen;
- und den Ablauf des Ablaufprogramms (115) durch das Hausgerät (105) in Abhängigkeit des Ergebnisses der Überprüfung freizugeben, sodass der Ablauf des Ablaufprogramms (115) freigegeben wird, wenn die vorbestimmte Gerätebedingung erfüllt ist, und, wenn die vorbestimmte Gerätebedingung verletzt ist, der Ablauf des Ablaufprogramms (115) durch das Hausgerät (105) nicht zugelassen oder einen Parameter des Ablaufprogramms (115), der die Gerätebedingung verletzt, derart geändert wird, dass die Gerätebedingung erfüllt ist.

10. Steuervorrichtung (125) nach Anspruch 9, wobei die Schnittstelle optisch ist.

11. Steuervorrichtung (125) nach Anspruch 10, wobei die Schnittstelle zur Abtastung eines zweidimensionalen QR-Codes eingerichtet ist.

## Claims

1. Method (200) for the sequential programming of a household appliance (105) with programmable sequential control, wherein the method (200) comprises the following steps:
- receiving (225) a sequential program (115) by the household appliance (105);
- checking (230) the sequential program (115) for a predetermined appliance condition by the household appliance (105); and
- releasing (235) the sequence of the sequential program (115) in the household appliance (105) as a function of the result of the check, wherein the sequence of the sequential program (115) is released when the predetermined appliance condition is fulfilled, and,
- when the predetermined appliance condition is violated, the sequence of the sequential program (115) is not permitted or a parameter of the sequential program (115) which violates the appliance condition is changed such that the appliance condition is fulfilled.

2. Method (200) according to claim 1, wherein the appliance condition relates to an operating parameter of an actuator (130) of the household appliance (105).

3. Method (200) according to claim 2, wherein the operating parameter relates to the frequency of a switching-on or off of the actuator (130).

4. Method (200) according to claim 2 or 3, wherein the operating parameter relates to a maximum switch-on duration of the actuator (130).

5. Method (200) according to one of claims 2 to 4, wherein the operating parameter relates to a property of a medium which can be influenced by means of the actuator (130).

6. Method (200) according to one of the preceding claims, wherein the sequential program (115) is also checked for a predetermined maximum elapsed time.

7. Method (200) according to one of the preceding claims, wherein the appliance condition is checked during the execution of the sequential program (115).

8. Method (200) according to one of the preceding claims, wherein the sequential program (115) is received (225) in an optically encoded form.

9. Control apparatus (125) for a household appliance (105) with programmable sequential control, wherein the control apparatus (125) comprises the following:
- an interface (165) for receiving a sequential program (115);
- a processing facility, which is designed to check the sequential program (115) for a predetermined appliance condition;
- and to release the sequence of the sequential program (115) in the household appliance (105) as a function of the result of the check, so that the sequence of the sequential program (115) is released when the predetermined appliance condition is fulfilled, and when the predetermined appliance condition is violated the sequence of the sequential program (115) is not permitted in the household appliance (105) or a parameter of the sequential program (115) which violates the appliance condition is changed such that the appliance condition is fulfilled.

10. Control apparatus (125) according to claim 9, wherein the interface is optical.

11. Control apparatus (125) according to claim 10, wherein the interface is designed to scan a two-dimensional QR code.

## Revendications

1. Procédé (200) destiné à la programmation séquentielle d'un appareil électroménager (105) avec une commande séquentielle programmable, dans lequel le procédé (200) comprend les étapes suivantes :
- réception (225) d'un programme séquentiel (115) par le biais de l'appareil électroménager (105) ;
- vérification (230) du programme séquentiel (115) par rapport à une condition d'appareil prédéterminée par le biais de l'appareil électroménager (105) ; et
- validation (235) de la séquence du programme séquentiel (115) dans l'appareil électroménager (105) en fonction du résultat de la vérification, dans lequel la séquence du programme séquentiel (115) est validée lorsque la condition d'appareil prédéterminée est remplie, et,
- lorsque la condition d'appareil prédéterminée est enfreinte, la séquence du programme séquentiel (115) n'est pas autorisée ou un paramètre du programme séquentiel (115) est modifié, qui enfreint la condition d'appareil de sorte que la condition d'appareil est remplie.

2. Procédé (200) selon la revendication 1, dans lequel la condition d'appareil concerne un paramètre de fonctionnement d'un actionneur (130) de l'appareil électroménager (105).

3. Procédé (200) selon la revendication 2, dans lequel le paramètre de fonctionnement concerne la fréquence d'une mise en marche ou à l'arrêt de l'actionneur (130).

4. Procédé (200) selon la revendication 2 ou 3, dans lequel le paramètre de fonctionnement concerne une durée de marche maximale de l'actionneur (130).

5. Procédé (200) selon l'une quelconque des revendications 2 à 4, dans lequel le paramètre de fonctionnement concerne une propriété d'un milieu apte à être influencé au moyen de l'actionneur (130).

6. Procédé (200) selon l'une quelconque des revendications précédentes, dans lequel en outre le programme séquentiel (115) est vérifié par rapport à un temps écoulé maximal prédéterminé.

7. Procédé (200) selon l'une quelconque des revendications précédentes, dans lequel la condition d'appareil est vérifiée pendant la réalisation du programme séquentiel (115).

8. Procédé (200) selon l'une quelconque des revendications précédentes, dans lequel le programme séquentiel (115) est reçu (225) sous une forme à codage optique.

9. Dispositif de commande (125) pour un appareil électroménager (105) avec une commande séquentielle programmable, dans lequel le dispositif de commande (125) comprend les éléments suivants :
- une interface (165) permettant la réception d'un programme séquentiel (115) ;
- un dispositif de traitement qui est configuré pour vérifier le programme séquentiel (115) par rapport à une condition d'appareil prédéterminée ;
- et valider la séquence du programme séquentiel (115) par le biais de l'appareil électroménager (105) en fonction du résultat de la vérification, de sorte que la séquence du programme séquentiel (115) est validée lorsque la condition d'appareil prédéterminée est remplie, et, lorsque la condition d'appareil prédéterminée est enfreinte, la séquence du programme séquentiel (115) n'est pas autorisée par le biais de l'appareil électroménager (105) ou un paramètre du programme séquentiel (115) qui enfreint la condition d'appareil est modifié de telle sorte que la condition d'appareil est remplie.

10. Dispositif de commande (125) selon la revendication 9, dans lequel l'interface est optique.

11. Dispositif de commande (125) selon la revendication 10, dans lequel l'interface est configurée pour le balayage d'un code QR bidimensionnel.
